# EUROPEAN PATENT APPLICATION

(11) **EP 1 070 906 A1**
(43) Date of publication of application: **24.01.2001**
(21) Application number: 00305014.3
(22) Date of filing: 13.06.2000
(51) Int. Cl.: F16L 59/02, B29C 67/20, C08J 9/32

(54) **Deep sea insulation material**

(30) Priority: 16.07.1999 US 144390 P; 05.06.2000 US 587705
(71) Applicant: FMC CORPORATION, Chicago Illinois 60601 (US)
(72) Inventor: Williams, Michael R., Houston, Texas 77068 (US); Cunningham, Christopher E., Spring, Texas 77388 (US)
(74) Representative: Hammler, Martin Franz

(57) **Abstract**

An insulation material (10) useful in deep water well drilling applications includes an elastic polymer matrix (12), a plurality of rigid macro-beads (14) within the elastic polymer matrix, an inelastic polymer matrix (16) within the macro-beads, and a plurality of hollow, insulative micro-beads (18) within the inelastic polymer matrix. The insulation material has adequate flexibility and elasticity to withstand thermal expansion and contraction, adequate compressive strength to withstand high water pressures, and good insulative properties at cold temperatures near the freezing point of water.

## Description

### FIELD OF THE INVENTION

This invention relates to an insulation material suitable for use on subsea equipment in deep water applications.

### BACKGROUND OF THE INVENTION

Offshore oil and gas wells are being developed in deeper waters where ambient seawater temperatures near the seabed are quite cold, typically only a few degrees above the freezing point of water. These very cold conditions can lead to plugging of the subsea wells and connected flowlines if the petroleum products produced from the wells are allowed to cool down to ambient temperature. In most cases, the temperature of the oil and/or gas produced from these wells is relatively hot (70.6°C to 121°C; 250°F to 250°F or more) within the reservoir. The fluids lose heat as they flow through the subsea equipment and pipelines which bring the fluids to a surface based processing facility. If the fluids fall below certain limits (typically in the range of 10°C to 21.1°C; 50°F to 70°F) deposition of paraffin wax and/or formation of methane hydrates can lead to flow restrictions and/or blockage of the subsea production system. Thus, particularly for deep water systems, it is desirable to provide effective thermal insulation on the subsea equipment to prevent excessive cooling of the produced fluids before they reach the processing facility.

Known insulation materials include polymer foams, nearly incompressible polymers, and nearly incompressible polymers filled with very small (e.g., microscopic) solid ceramic beads or hollow plastic or glass beads. Polymer foams provide good insulation in low pressure applications, but collapse under high pressure in deep water. Nearly incompressible polymers maintain their integrity, but are not good insulators.

Nearly incompressible polymers filled with very small (e.g. microscopic) ceramic or hollow plastic or hollow glass beads provide good insulation. Unfortunately, these materials are quite hard and brittle, are difficult to install, and are prone to cracking. Cracking occurs when the insulation material and underlying steel equipment are heated and cooled. During heating the inner surface of the insulation material (adjacent the hot steel equipment) expands more than the outer surface of the insulation material (adjacent the cold sea water). This differential expansion causes cracking. During cooling, the insulation material shrinks more and faster than the steel equipment, causing more cracking.

There is a need or desire for an insulation material which does not collapse under pressure, does not crack, is easy to install, and provides effective insulation at low temperatures.

### SUMMARY OF THE INVENTION

The present invention provides an insulation material suitable for use in deep sea applications, which alleviates the problems of collapsing, cracking, and insufficient performance associated with prior art materials.

According to the invention, there is provided an insulation material, comprising:
a composite (14) comprising an inelastic matrix polymer (16);
   characterised in that said composite is formed into a plurality of bodies (14) contained in an elastic matrix polymer (12).

The insulation material in a preferred embodiment of the invention includes a first ("global") polymer matrix made from a flexible elastomeric thermoset or thermoplastic polymer material. Contained within the first polymer matrix are a plurality of macro-beads having mean diameters of about 1.27 to about 25.4 mm; 0.05 to about 1.0 inch. Each of the macro-beads is formed with a second polymer matrix that is generally more rigid and less flexible than the first polymer matrix, and is made from a relatively inelastic thermoset or thermoplastic polymer material. Contained within the second polymer matrix is a plurality of insulative micro-beads having mean diameters of about 0.00762 to 3.175mm; 0.0003 to about 0.125 inch, and having an interior which may be partially hollow and gas filled, or may be solid.

During use, the more rigid macro-beads provide insulative properties similar to the best prior art deep sea insulative materials, made of the brittle composite described above. The elastic polymer matrix containing the macro-beads provides flexibility to the insulative material by permitting thermal expansion and contraction of the macro-beads, and of the deep sea equipment being insulated. The elastic polymer matrix surrounding the macro-beads simply stretches and retracts in response to the thermal expansion and contraction of the macro-beads and/or the insulated equipment, thus avoiding the cracking associated with the most effective prior art insulative materials.

With the foregoing in mind, it is a feature and advantage of the invention to provide an improved insulative material which protects equipment and pipelines from cold sea water temperatures, and withstands high external pressure, deflection-induced stresses and thermally-induced dimensional stresses. It is also a feature and advantage of the invention to provide a method of applying the improved insulative material to deep sea equipment and/or pipelines.

These and other features and advantages will become further apparent from the following detailed description of the presently preferred embodiments, read with the accompanying drawing.

### BRIEF DESCRIPTION OF THE DRAWING

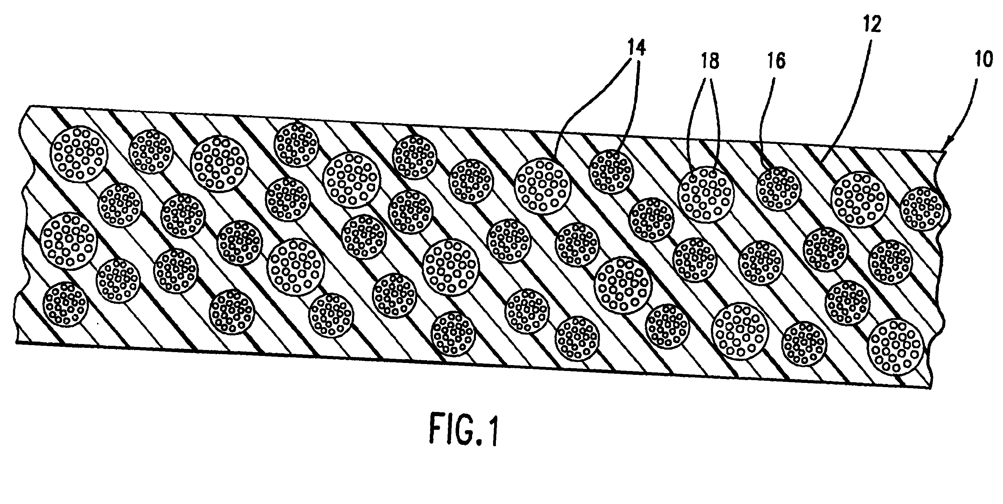

Fig. 1 is a sectional view of an insulative material of the invention.

### DETAILED DESCRIPTION OF THE PRESENTLY PREFERRED EMBODIMENTS

The present invention is an insulative material suitable for deep sea applications. Referring to Fig. 1, an insulative layer or material 10 includes a first matrix 12 of elastic thermoset or thermoplastic polymer, and a plurality of macro-beads 14 contained within the first ("global") matrix 12. Each macro-bead 14 is formed from a second matrix 16 of relatively inelastic thermoset or thermoplastic polymer, and a plurality of micro-beads 18 contained within the second matrix 16.

As used herein, the term "elastic polymer" refers to a polymer which, when formed into a 25.4 mm (one-inch) thick film or sheet not containing any beads or fillers, can be uniformly stretched in at least one direction by at least 25%, i.e. to at least 125% of its initial unstretched length at 1.67°C (35°F) without breaking or rupturing, preferably to at least 150% of its initial length, more preferably to at least 200% of its initial length, most preferably to at least 300% of its initial length. The term "inelastic polymer" or "relatively inelastic polymer" refers to a polymer which, when formed into a 25.4mm (one-inch) thick film or sheet, can be uniformly stretched by no more than about 20%, i.e. to no more than about 120% of its initial unstretched length in any direction at 1.67°C (35°F) without breaking, preferably to no more than 110% of its initial length, more preferably to no more than 105% of its initial length. The "stretchability" of a material refers to the longest distance a 25.4mm (one-inch) thick sample of the pure material can be steadily and uniformly stretched in any direction without breaking, at 1.67°C (35°F).

Suitable elastic polymers for the first matrix 12 include thermosetting and thermoplastic elastic polymers. Thermosetting elastic polymers include, without limitation, aromatic polyurethanes curable with isocyanate cross-linking agents, liquid polysulfides curable with a metal oxide or epoxy curing agent, silicone rubbers curable with a wide variety of peroxide and other known catalysts, and ethylene propylene diene resins curable with peroxides and other catalysts. Preferably, the thermosetting polymers are curable at room temperature. Suitable thermoplastic elastic polymers include, without limitation, thermoplastic polyurethanes, polyether esters, styrene butadiene copolymers, and the like. Blends of these materials are also suitable, so long as the blend is elastic.

The macro-beads 14 should have a mean particle diameter of about 1.27-25.4mm (0.05-1.0 inch), preferably about 2.54-19.05mm (0.10-0.75 inch), more preferably about 3.81-12.7mm (0.15-0.50 inch). The insulative material 10 should include as large a quantity of the macro-beads 14 as possible to facilitate effective thermal insulation. The insulative material 10 should include about 10-70% by weight first polymer matrix 12 and about 30-90% by weight macro-beads 14, preferably about 20-60% by weight first polymer matrix 12 and 40-80% by weight macro-beads 14, more preferably about 30-50% by weight first polymer matrix 12 and about 50-70% by weight macro-beads 14. Macro-beads 14 of two or more different mean diameters may be combined in order to facilitate high macro-bead loading.

The second polymer matrix 16 should be less elastic, and more rigid, than the first polymer matrix 12. A wide variety of relatively inelastic thermoset or thermoplastic polymers can be employed for the second matrix 16. Suitable inelastic thermosetting polymers include, without limitation, rigid epoxy-based resins, rigid (i.e., highly crosslinked) polyurethanes, and the like. Suitable inelastic thermoplastic polymers include, without limitation, polyethylenes, polypropylenes, polycarbonates, polystyrenes, polyvinyl chlorides, and the like.

The solid or hollow micro-beads 18 contained in the second polymer matrix 16 may be constructed from ceramic, glass, plastic, or another material highly resistant to compressive fracture. The term "hollow" means that at least about 10% of the volume occupied by an individual micro-bead is filled with air or another insulative gas. Preferably, at least about 25% and, more preferably, at least about 50% of the volume occupied by a hollow micro-bead is filled with air or another insulative gas. The term "solid" refers to micro-beads that are not hollow. The micro-beads 18 should have a mean diameter of about 0.00762-3.175mm (0.0003-0.125 inch), preferably about 0.0127-1.27mm (0.0005-0.05 inch), more preferably about 0.0254-0.254mm (0.001-0.01 inch).

The macro-beads 14 should include about 10-70% by weight of the second polymer matrix 16 and about 30-90% by weight of the micro-beads 18. Preferably, the macro-beads 14 include about 20-60% by weight of the second polymer matrix 16 and about 40-80% by weight of the micro-beads 18. More preferably, the macro-beads 14 include about 30-50% by weight of the second polymer matrix 16 and about 50-70% by weight of the micro-beads 18.

The insulation material of the invention can be applied in one or more layers of desired thickness. The thickness of the insulation layer 10 may range from about 6.35-127mm (0.25-5.0 inches), suitably about 12.7-101.6mm (0.5-4.0 inches), desirably about 25.4-76.2mm (1.0-3.0 inches). The insulation material may be applied as a tape or other pre-formed layer, or may be formed in situ by constructing a mold around the object to be insulated, and injecting an uncured and/or molten mix of precursor insulation material into the mold. The insulation material may then harden within the mold, via the curing (if thermoset) or cooling from a molten state (if thermoplastic). The insulation material may also be applied as a trowelable paste which hardens after its application.

The insulation material of the invention can also be manufactured using a variety of techniques. Macro-beads 14 can be formed by mixing micro-beads 18 with the second matrix polymer 16, placing the mixture into molds to form the macro-beads 14, and then solidifying the mixture via curing (if polymer 16 is thermosetting) or cooling (if polymer 16 is thermoplastic). Both the macro-beads 14 and micro-beads 18 may be spherical, or may have another suitable shape. Then, macro-beads14 can be mixed with the first polymer matrix 12, and this mixture can be solidified by curing (if the first matrix polymer 12 is thermosetting) or cooling (if the first matrix polymer is thermoplastic).

In an alternative embodiment, the insulation layer 10 of the invention can be pre-formed, and covered on both sides with an elastomeric jacket. The elastomeric jacket can be formed from the same elastic polymers used in the first matrix 12 or another suitable elastic material. The elastic jacket can have a thickness on both sides of insulation layer 10, of about 6.35-50.8mm; 0.25-2.0 inch (or about 3.175-25.4mm; 0.125-1.0 inch per side). The elastic jacket protects the insulation layer 10 from leakage or separation in the event that layer 10 does crack during use. The elastic jacket may be in the form of a sleeve which surrounds insulation layer 10.

The resulting insulation material provides an excellent combination of insulative properties, durability, and flexibility, as required for deep sea applications.

While the embodiments of the invention described herein are presently preferred, various modifications and improvements can be made without departing from the scope of the invention as defined in the appended claims.

## Claims

1. An insulation material, comprising:
a composite (14) comprising an inelastic matrix polymer (16);
characterised in that said composite is formed into a plurality of bodies (14) contained in an elastic matrix polymer (12).

2. Insulation material as defined in claim 1, characterised in that the composite bodies (14) are formed from micro-beads (18) contained in the inelastic matrix polymer (16) and the composite bodies form macro-beads (14) which are contained in the elastic matrix polymer (12).

3. The insulation material of claim 2, characterised in that the micro-beads (18) have a mean diameter of about 0.00762-3.175 mm, preferably about 0.0127-1.27 mm, more preferably about 0.0254-0.254 mm (about 0.0003-0.125 inch, preferably about 0.0005-0.05 inch, more preferably about 0.01-0.1 inch).

4. Insulation material according to claim 2 or 3 wherein the micro-beads (18) are hollow and comprise about 30-90% by weight, preferably about 40-80% by weight, more preferably about 50-70% by weight of the bodies (14).

5. Insulation material according to claim 4 characterised in that the micro-beads are at least 10%, preferably at least 25%, more preferably at least 50% hollow.

6. Insulation material according to claim 2 or 3 characterised in that the micro-beads are solid.

7. Insulation material according to and of claims 2-6, characterised in that the balance of the bodies (14) is made of the inelastic matrix material.

8. Insulation material according to any of claims 2-7 characterised in that the micro-beads (18) comprise a ceramic material.

9. Insulation material according to any of claims 2-7, characterised in that the micro-beads (18) comprise glass.

10. Insulation material according to any of claims 2-7, characterised in that the micro-beads (18) comprise plastic.

11. The insulation material of any preceding claim characterised in that the elastic matrix polymer (12) comprises a polyurethane.

12. The insulation material of any of claims 1-10 characterised in that the elastic matrix polymer (12) comprises a polysulfide.

13. The insulation material of any of claims 1-10 characterised in that the elastic matrix polymer (12) comprises a silicone polymer.

14. The insulation material of any of claims 1-10 characterised in that the elastic matrix polymer (12) comprises a thermoset polymer.

15. The insulation material of any of claims 1-10 characterised in that the elastic matrix polymer (12) comprises a thermoplastic polymer.

16. The insulation material of any preceding claim, wherein the bodies (14) have a mean diameter of about 1.27-25.4 mm, preferably about 2.54-19.05 mm, more preferably about 3.81-12.7 mm (about 0.05-1.0 inch, preferably about 0.10-0.75 inch, more preferably about 0.15-0.50 inch).

17. Insulation material according to any preceding claim, characterised in that the material forms a layer and includes an elastic jacket covering the layer.

18. Insulation material as defined in any preceding claim characterised in that it comprises about 10-70% by weight of the elastic polymer matrix (12), 30-90% by weight of said bodies (14), the inelastic polymer matrix (16) constituting about 10-70% by weight of the bodies (14).

19. The insulation material of any preceding claim, characterised in that it forms a layer having a thickness of about 6.35-127 mm, preferably about 12.7-101.6 mm, more preferably about 25.4-76.2 mm (about 0.25-5.0 inches, preferably about 0.5-4.0 inches, more preferably about 1.0-3.0 inches).

20. An insulation material according to any preceding claim characterised in that the elastic matrix polymer (12) has a stretchability of at least 125%, preferably at least 150%, more preferably at least 200%, most preferably at least 300%.

21. An insulation material according to any preceding claim characterised in that the inelastic matrix polymer (16) has a stretchability of no more than about 120%, preferably no more than about 110%, more preferably no more than 105%.
